(19) Europäisches Patentamt
European Patent Office
Office européen des brevets

(11) **EP 3 809 580 B1**

(12) **EUROPEAN PATENT SPECIFICATION**

(45) Date of publication and mention
of the grant of the patent:
**07.06.2023  Bulletin 2023/23**

(21) Application number: **19851693.2**

(22) Date of filing: **28.06.2019**

(51) International Patent Classification (IPC):
*H02P 6/00* (2016.01)     *H02P 6/08* (2016.01)
*H02P 6/16* (2016.01)     *H02P 29/024* (2016.01)

(52) Cooperative Patent Classification (CPC):
**H02P 29/024; H02P 6/16**

(86) International application number:
**PCT/CN2019/093487**

(87) International publication number:
**WO 2020/038107 (27.02.2020 Gazette 2020/09)**

(54) **ELECTRIC VEHICLE, METHOD AND DEVICE  FOR DIAGNOSING ROTARY TRANSFORMER INITIAL POSITION, AND COMPUTER READABLE MEDIUM**

ELEKTRISCHES FAHRZEUG, VERFAHREN UND VORRICHTUNG ZUR DIAGNOSE DER AUSGANGSPOSITION EINES DREHTRANSFORMATORS, SOWIE COMPUTERLESBARES MEDIUM

VÉHICULE ÉLECTRIQUE, PROCÉDÉ ET DISPOSITIF DE DIAGNOSTIC DE POSITION INITIALE DE TRANSFORMATEUR ROTATIF, ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2018  CN 201810962957**

(43) Date of publication of application:
**21.04.2021  Bulletin 2021/16**

(73) Proprietors:
• **Guangzhou Xiaopeng Motors Technology Co., Ltd.**
**Tianhe District**
**Guangzhou**
**Guangdong (CN)**
• **Guangzhou Chengxing Zhidong Motors Technology Co., Ltd.**
**Guangzhou, Guangdong 510700 (CN)**

(72) Inventors:
• **DENG, Yinlong**
**Guangzhou, Guangdong 510000 (CN)**

• **REN, Qiang**
**Guangzhou, Guangdong 510000 (CN)**
• **XU, Xin**
**Guangzhou, Guangdong 510000 (CN)**
• **QI, Honggang**
**Guangzhou, Guangdong 510000 (CN)**
• **WANG, Hao**
**Guangzhou, Guangdong 510000 (CN)**

(74) Representative: **Ran, Handong**
**Maucher Jenkins**
**Seventh Floor Offices**
**Artillery House**
**11-19 Artillery Row**
**London SW1P 1RT (GB)**

(56) References cited:
CN-A- 103 532 451     CN-A- 105 391 363
CN-A- 106 143 162     CN-A- 107 124 130
CN-A- 107 819 418     CN-A- 107 834 934
CN-A- 109 286 345     US-A1- 2012 185 213
US-B1- 6 392 418

**Description**

TECHNICAL FIELD

The present disclosure relates to the field of electric vehicles, and more particularly, to an electric vehicle, a method and a device for diagnosing an initial position of a resolver.

BACKGROUND

A position of a magnetic pole of a permanent-magnet synchronous motor used in an electric vehicle cannot be directly determined. It is necessary to couple a resolver as a sensor to an end of a rotor of the permanent-magnet synchronous motor. The resolver determines an initial position of the resolver, and indirectly acquires the position of the magnetic pole of the rotor. There is a position deviation between the position of magnetic pole and the initial position of the resolver. Thus, an accurate closed-loop control of the permanent-magnet synchronous motor can be realized according to the position of the magnetic pole. In a test process of the whole vehicle, by writing an initial angle written and fixed into a motor controller, the initial position of the resolver of the motor of the electric vehicle can be defined. Thus, a control accuracy for driving the whole vehicle can be satisfied. However, after the vehicle rolls off a production line, the initial position of the resolver is not self-diagnosed and self-corrected. The initial position of the resolver is changed with external factors, thereby decreasing a torque control accuracy of the vehicle, being prone to tremble, reducing drive comfort, and causing a vehicle fault, and so on.

CN103532451A discloses a fault diagnosis method for a position signal of a rotary transformer; US6392418B1 discloses a method and system for diagnostics and ascertaining status of an electric machine coupled to a polyphase bus.

SUMMARY

The present disclosure provides an electric vehicle, a method and a device for diagnosing an initial position of a resolver, to realize to diagnose an initial position of a resolver. The invention is defined by features of independent claims. Preferred embodiments of the inventions are defined by features of dependent claims.

The method can realize to diagnose the initial position of the resolver, and has an advantage of realizing the accurate closed-loop control of the motor.

BRIEF DESCRIPTION OF THE DRAWINGS

FIG.1 is a structural diagram of a device for diagnosing an initial position of a resolver, according to the present disclosure.

FIG.2 is a structural diagram of an electric vehicle according to the present disclosure.

FIG.3 is a flowchart of a method for diagnosing an initial position of a resolver according to the present disclosure.

FIG.4 is a flowchart of a position abnormity determination step and a torque abnormity determination step, according to a method for diagnosing an initial position of a resolver of the present disclosure.

FIG.5 is a flowchart of a fault treatment step, according to a method for diagnosing an initial position of a resolver of the present disclosure.

DETAILED DESCRIPTION OF PREFERRED EMBODIMENTS

The disclosure will be further described in detail below with reference to the accompanying drawings. Similar element labels are adopted to represent similar elements in different embodiments. In the following embodiments, according to detail descriptions, the present disclosure can be understood. Those skilled in the art can readily recognize that some characteristics can be omitted in different cases, or replaced by other elements, materials, or methods. In some cases, some operations corresponding to the present disclosure are not shown or described in the specification, in order to prevent important descriptions of the present disclosure from being not outstanding. It is not necessary to describe in detail, for those skilled in the art. Those skilled in the art can completely understand the operations, according to the description and a general knowledge in the art.

Additionally, some characteristics, operations, or features in the description, can be arbitrarily combined to form a number of embodiments. At the same time, those skilled in the art also can replace or adjust some steps or some operations described in the method. Thus, the sequence of the accompanying drawings are merely for describing a certain embodiment, and are not necessary, unless a certain sequence must be followed.

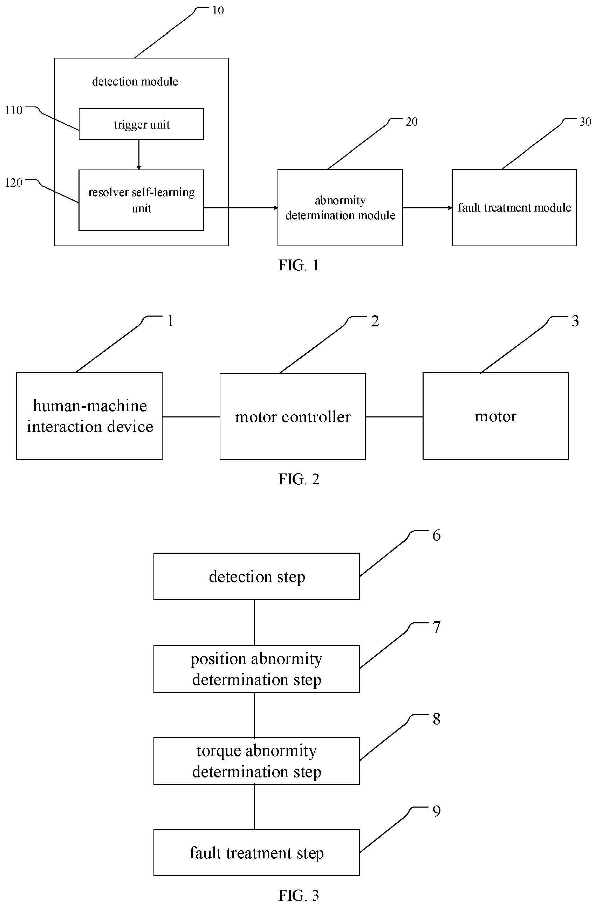

As illustrated in FIG.1, the present disclosure provides a device for diagnosing an initial position of a resolver (rotary transformer). The device includes a detection module 10, an abnormity determination module 20 and a fault treatment module 30.

The detection module 10 is configured to detect a real value of an initial position of a resolver mounted on a motor. For example, the real value of the initial position of the resolver is detected, when the detection module 10 is triggered in a trigger condition.

The abnormity determination module 20 is configured to acquire an initial position deviation according to the real value and an original value of the initial position of the resolver, determine where the initial position deviation is located, according to a predetermined initial position threshold range, acquire a torque deviation according to a torque of the motor and a preset given torque, and compare the torque deviation with a predetermined torque deviation threshold.

The fault treatment module 30 is configured to determine whether the initial position of the resolver is normal, according to the times that the initial position deviation exceeds the predetermined initial position threshold range and the times that the torque deviation is greater than the predetermined torque deviation threshold. According to the times, it is determined whether the initial position of the resolver is normal, thereby effectively avoiding interferences of accidental factors, and improving accuracy of diagnosing.

The device for diagnosing the initial position of the resolver of the present disclosure, can accurately and effectively diagnose the initial position of the resolver, and has an advantage of realizing the accurate closed-loop control of the motor.

The device for diagnosing the initial position of the resolver of the present disclosure, can be applied to an electric vehicle. For example, the device for diagnosing the initial position of the resolver is a motor controller, and is arranged in the electric vehicle. As illustrated in FIG.2, the electric vehicle includes a human-machine interaction device 1, a motor controller 2, and a motor 3.

The motor 3 is configured to drive a number of wheels of the electric vehicle.

The motor controller 2 is configured to control the torque of the motor 3, and execute functions of the detection module 10, the abnormity determination module 20 and the fault treatment module 30.

In detail, the detection module 10 includes a trigger unit 110 and a resolver self-learning unit 120. The trigger unit 110 is configured to trigger the resolver self-learning unit 120 to work, according to the trigger condition. For example, the trigger unit 110 detects a status and a rotation speed of the motor, and determines the status and the rotation speed of the motor. The trigger unit 110 triggers the resolver self-learning unit 120 to work, when the motor is in an idle status and the rotation speed is greater than or equal to a predetermined rotation speed. For example, the rotation speed of the motor is indirectly detected by a wheel speed sensor of the electric vehicle, and is transmitted to the motor controller 2 by a CAN-bus. The predetermined rotation speed can be determined according to an actual requirement. The resolver self-learning unit 120 triggered by the trigger unit 110 detects the real value of the initial position of the resolver. For example, the resolver self-learning unit 120 acquires the real value of the initial position of the resolver by a self-learning program, which can be performed by a related art, and not limited by the present disclosure. The initial position of the resolver is generally represented by an angle. The resolver self-learning unit 120 acquires a real value of the initial position of the resolver, when the resolver self-learning unit 120 is triggered every time. Generally, the resolver self-learning unit 120 can be triggered many times in a power-on period of the electric vehicle. A period from starting the electric vehicle to stopping the electric vehicle is the power-on period.

The abnormity determination module 20 includes an abnormity position determination unit and an abnormity torque determination unit.

The abnormity position determination unit is configured to acquire N real values of the initial position of the resolver from the resolver self-learning unit 120. Because a self-learning process of the resolver self-learning unit 120 is very fast, the abnormity position determination unit can acquire the real value of the initial position of the resolve from the resolver self-learning unit 120, after the resolver self-learning unit 120 is triggered for a certain time. It is ensured that at least N real values of the initial position of the resolver can be acquired. The abnormity position determination unit is configured to calculate an average value $\overline{\theta_n}$ of the N real values of the initial position of the resolver, calculate an absolute value of a difference of the average value $\overline{\theta_n}$ and an original value $\theta_0$ of the initial position, and take the absolute value as an initial position deviation. The abnormity position determination unit is also configured to compare the initial position deviation with a minimum allowable value and a maximum allowable value of a predetermined initial position deviation. The minimum allowable value $a$ is a minimum value of a predetermined initial position threshold range, and the maximum allowable value $\partial_{max}$ is a maximum value of the predetermined initial position threshold range, and the predetermined initial position threshold range is $[\partial, \partial_{max}]$. The original value $\theta_0$ of the initial position is a factory setting original position of the resolver. The N is an integer greater than or equal to 1. In order to simplify a calculation, the N can be 1. An accidental abnormity data can be effectively eliminated, by applying the N real values of the initial position of the resolver to calculate the average value, and applying the average value for a subsequent calculation. Thus, the accuracy of diagnosing can be ensured.

When the initial position deviation is less than the minimum value $\partial$ of the predetermined initial position threshold range, i.e., $|\overline{\theta_n} - \theta_0| < \partial$, and a current power-on period is a first power-on period after initializing the abnormity position determination unit (a first value t is 0 and a second value k is 0), an abnormity determination program is ended, and the abnormity determination module 20 finishes working. When the current power-on period is not the first power-on period, L is subtracted from the first value t, and L is subtracted from the second value k. In other words, the abnormity position determination unit determines the first value t and/or the second value k whether are 0. When the abnormity position determination unit determines the first value t and/or the second value k are 0, the abnormity determination program is ended. When the abnormity position determination unit determines the first value t and/or the second value k are not 0, L is subtracted from the first value t, and L is subtracted from the second value k. Then the abnormity determination program is ended, and the fault treatment module start to work. The first value represents an extent of the real value of the initial position of the resolver deviating from the original value. When the initial position deviation is less than the minimum value *a* of the predetermined initial position threshold range, the initial position of the resolver has an allowable deviation. The L is an integer greater than or equal to 1, in order to simplify a calculation, the L can be 1 in this embodiment.

When the initial position deviation is greater than the maximum value of the predetermined initial position threshold range, L is added to the first value t, and the abnormity determination program is ended, and the fault treatment module starts to work.

When the initial position deviation is located in the predetermined initial position threshold range, the abnormity torque determination unit is started to determine a torque.

The abnormity torque determination unit is configured to detect the motor to obtain M torques. For example, the abnormity torque determination unit detects a torque when a real value of the initial position of the resolver is acquired by the self-learning program. For another example, the abnormity torque determination unit detects the motor M times to obtain M torques $T_V$, when the initial position deviation is located in the predetermined initial position threshold range. M torque accuracies corresponding to the M torques are acquired, according to the following formula:

$$\frac{\left| T_V - T_M \right|}{T_V} \times 100\%,$$

wherein $T_M$ represents a given torque.

The abnormity torque determination unit calculates an average value of the M torque accuracies $\overline{T_A}$, and takes the average value of the M torque accuracies as the torque deviation. The M is an integer greater than or equal to 1. In order to simplify a calculation, the M can be 1. The M can be equal to or unequal to the N. The abnormity torque determination unit compares the torque deviation with the predetermined torque deviation threshold. The torque of the motor can be acquired by detecting an output torque of the motor and the torque of the motor is a real value of the output torque of the motor. The torque of the motor can also be acquired by converting a torque control instruction sent from the motor controller 2 to the motor 3, and the torque of the motor is a theoretical value of the output torque of the motor. In this embodiment, the theoretical value of the output torque of the motor is applied, thereby omitting a sensor.

When the torque deviation $\overline{T_A}$ is larger than the predetermined torque deviation threshold x%, L is added to the second value k, and an abnormity determination program is ended, and the fault treatment module starts to work. The second value k represents a deviation extent of torque.

When the torque deviation $\overline{T_A}$ is less than or equal to the predetermined torque deviation threshold x%, and the current power-on period is the first power-on period after initializing the abnormity position determination unit, the abnormity determination program is ended and the motor controller 2 finishes diagnosing, and the fault treatment module starts to work. When the current power-on period is not the first power-on period, L is subtracted from the first value t, and L is subtracted from the second value k. In other words, the abnormity position determination unit determines the first value t and/or the second value k whether are 0. When the abnormity position determination unit determines the first value t and/or the second value k are 0, the abnormity determination program is ended. When the abnormity position determination unit determines the first value t and/or the second value k are not 0, L is subtracted from the first value t, and L is subtracted from the second value k. Then, the abnormity determination program is ended, and the fault treatment module starts to work. When the torque deviation $\overline{T_A}$ is less than or equal to the predetermined torque deviation threshold x%, the torque deviation may be allowable.

The first value t and the second value k are added or subtracted by two counters arranged in the motor controller 2. The motor controller 2 also includes a memory, such as an electrically-erasable programmable read-only memory(EEPROM). The values recorded by the two counters are stored in the EEPROM.

The fault treatment module 30 is configured to compare the first value t and a predetermined first threshold b, and compare the second value k and a predetermined second threshold. The initial position of the resolver is determined to be normal, and the electric vehicle performance is determined to be normal, when the first value t is less than the predetermined first threshold b, while the second value k is less than the predetermined second threshold a. The initial position of the resolver is determined abnormal, when the first value t is greater than or equal to the predetermined first threshold b. The values of the a and the b are determined according to an actual requirement.

In detail, an update program is notified to a user on the human-machine interaction device, when the first value t is less than the predetermined first threshold b, while the second value k is greater than or equal to the predetermined second threshold a. The human-machine interaction device update according to an over the air (OTA) update condition, after the user confirms to update. When the OTA update condition is met, the human-machine interaction device is updated. When the OTA update condition is not met, the human-machine interaction device can notify the user to choose to update next time. The two counters are reset (the first value and the second value are cleared to zero), after the human-machine interaction device is updated. Thus, in the present disclosure, when a fault level is low, the update can be confirmed by the user, thereby decreasing a diving risk, and saving time and expense for repairing the fault.

The user is notified of a fault occurring, when the first value t is greater than or equal to the predetermined first threshold b, while the second value k is less than the predetermined second threshold a. For example, the user is notified the fault occurring on the human-machine interaction device, and the vehicle can be detected and repaired by an after-sale-service. The two counters are cleared to zero after the update program is executed.

The user is notified of a serious fault occurring, when the first value t is greater than or equal to the predetermined first threshold b, while the second value k is greater than or equal to the predetermined second threshold a. For example, the user is notified of the serious fault occurring on the human-machine interaction device, and the vehicle is detected and repaired by the after-sale-service. The two counters are cleared to zero after the update program is executed. A level of the serious fault is higher than the level of the fault. In the present embodiment, when a fault level is high, the user is notified by the human-machine interaction device to go to the after-sale-service for detecting and treating the fault, thereby decreasing a diving risk. According to the different fault levels, different fault treatment method can be used, thereby improving comfort of driving the electric vehicle, and ensuring safety performance.

In summary, the motor controller is improved in the present disclosure. The electric vehicle rolls off the production line to a user. When the motor controller determines the motor is in an idle status and the rotation speed is greater than or equal to the predetermined rotation speed, and the motor controller performs an self-learning program of an initial angle of a resolver, according to a trigger condition. The motor can acquire the real value of the initial position of the resolver, and compare the real value with the factory setting original value of the initial position , and determine to whether calculate the torque deviation according to a comparison result, and notify a user to update and repair the electric vehicle according to the initial position deviation and the torque deviation. In a lifetime of the electric vehicle, driving parameters can be corrected by self-learning, and safety and stability of driving the electric vehicle can be ensured.

The present disclosure also provides a method for diagnosing an initial position of a resolver, based on the device for diagnosing an initial position of the resolver in the above embodiment. As illustrated in the FIG.3, the method includes steps as follow.

A detection step 6: a real value of the initial position of the resolver mounted on a motor is detected. For example, the real value of the initial position of the resolver is detected, when a trigger unit is triggered in a trigger condition. The trigger condition can be that the motor is in an idle status and a rotation speed is greater than or equal to a predetermined rotation speed. For example, the status and the rotation speed of the motor are detected, and the real value of the initial position of the resolver is detected, when the motor is in the idle status and the rotation speed is greater than or equal to the predetermined rotation speed. The real value of the initial position of the resolver, can be acquired by a self-learning program, which can be performed by a related art, and not limited by the present disclosure.

A position abnormity determination step 7: an initial position deviation is acquired, according to the real value and an original value of the initial position of the resolver, and where the initial position deviation is located is determined, according to a predetermined initial position threshold range. For example, N real values of the initial position of the resolver are acquired from the detection step 6, and an average value $\overline{\theta_n}$ of N real values of the initial position is calculated, and an absolute value of a difference of the average value $\overline{\theta_n}$ and an original value $\theta_0$ of the initial position is calculated, and the absolute value is taken as the initial position deviation. The abnormity position determination unit is also configured to compare the initial position deviation with a minimum allowable value and a maximum allowable value of a predetermined initial position deviation. The minimum allowable value $a$ is a minimum value of a predetermined initial position threshold range, and the maximum allowable value $\partial_{max}$ is a maximum value of the predetermined initial position threshold range, and the predetermined initial position threshold range is $[\partial, \partial_{max}]$. The original value $\theta_0$ of the initial position is a factory setting original position of the resolver. The N is an integer greater than or equal to 1. In order to simplify a calculation, the N can be 1. An accidental abnormal data can be effectively eliminated, by applying the N real values of the initial position of the resolver to calculate the average value, and applying the average value for a subsequent calculation. Thus, the accuracy of diagnosing can be ensured.

A torque abnormity determination step 8: a torque deviation is acquired, according to a torque of the motor and a preset given torque, and the torque deviation is compared with a predetermined torque deviation threshold.

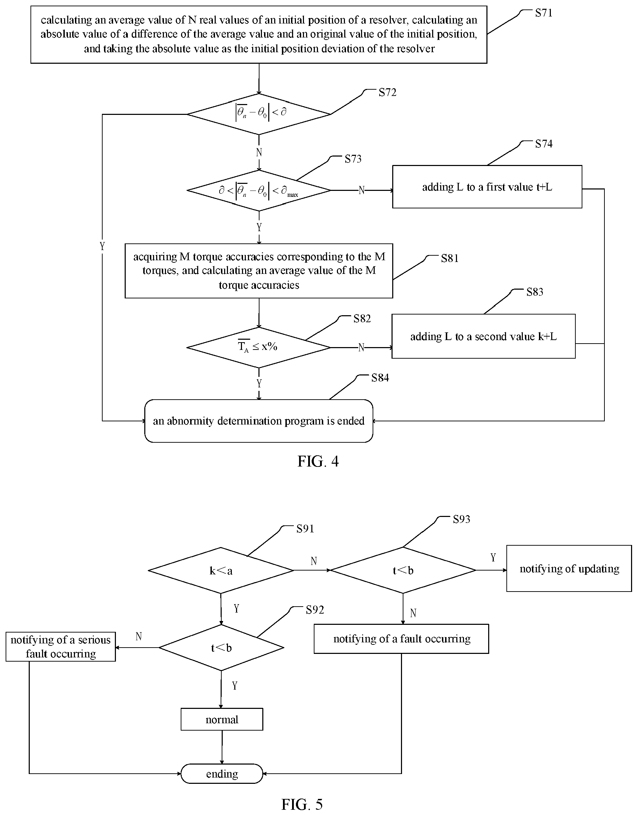

As illustrated in the FIG.4, the step 7 and step 8(a program of abnormity determination) includes steps as follow.

S71, the average value $\overline{\theta_n}$ of N real values of the initial position is calculated, and the absolute value of a difference of the average value $\overline{\theta_n}$ and the original value $\theta_0$ of the initial position is calculated, and the absolute value is taken as the initial position deviation.

S72, whether the initial position deviation is less than the minimum allowable value $a$ of the predetermined initial position deviation is determined. When the initial position deviation is less than the minimum allowable value $a$ of the predetermined initial position deviation, and a current power-on period is a first power-on period after initializing the abnormity position determination unit,, a step of S84 is performed. When the initial position deviation is less than the minimum allowable value $a$ of the predetermined initial position deviation, and the current power-on period is not the first power-on period, L is subtracted from the first value t, and L is subtracted from the second value k, and the step of S84 is performed. When the initial position deviation is greater than or equal to the minimum allowable value $a$ of the predetermined initial position deviation, a step of S73 is performed.

S73, whether the initial position deviation is located in the predetermined initial position threshold range is determined. When the initial position deviation is located in the predetermined initial position threshold range, a step of S81 is performed. When the initial position deviation is not located in the predetermined initial position threshold range, a step of S74 is performed.

S74, L is added to the first value t, and the step of S84 is performed.

S81, M torques $T_V$ are obtained by detecting the motor M times, and M torque accuracies are acquired corresponding to the M torques $T_V$, according to the following formula:

$$\frac{|T_V - T_M|}{T_V} \times 100\%,$$

wherein $T_M$ represents a given torque.

An average value of the M torque accuracies $\overline{T_A}$ is calculated, and the average value of the M torque accuracies $\overline{T_A}$ is taken as the torque deviation. The M is an integer greater than or equal to 1. In order to simplify a calculation, the M can be 1. The M can be equal to or unequal to the N.

S82, whether the torque deviation is less than or equal to the predetermined torque deviation threshold is determined. When the torque deviation is less than or equal to the predetermined torque deviation threshold, and the current power-on period is the first power-on period after initializing the abnormity position determination unit, the step of S84 is performed. When the torque deviation is less than or equal to the predetermined torque deviation threshold, and the current power-on period is not the first power-on period, L is subtracted from the first value t, and L is subtracted from the second value k, and the step of S84 is performed. When the torque deviation is greater than the predetermined torque deviation threshold, a step of S83 is performed.

S83, L is added to the second value k, and the step of S84 is performed.

S84, an abnormity determination program is ended, and a step of 9 is performed.

A fault treatment step 9: whether the initial position of the resolver is normal is determined, according to the times that the initial position deviation exceeds the predetermined initial position threshold range and the times that the torque deviation is greater than the predetermined torque deviation threshold. In detail, the first value t with a predetermined first threshold b is compared, and the second value k with a predetermined second threshold a is compared. The initial position of the resolver is determined normal, and a performance of the electric vehicle is determined normal, when the first value t is less than the predetermined first threshold b, while the second value k is less than the predetermined second threshold a. The initial position of the resolver is determined abnormal, when the first value t is greater than or equal to the predetermined first threshold b.

As illustrated in the FIG.5, the fault treatment step 9 includes steps as follow.

S91, whether the second value k is less than the predetermined second threshold a is determined. A step of S92 is performed, when the second value k is less than the predetermined second threshold a. A step of S93 is performed, when the second value k is greater than or equal to the predetermined second threshold a.

S92, whether the first value t is less than the predetermined first threshold b is determined. The initial position of the resolver is determined normal, and the electric vehicle performance is determined normal, when the first value t is less than the predetermined first threshold b. A user is notified of a serious fault occurring, when the first value t is greater than or equal to the predetermined first threshold b.

S93, whether the first value t is less than the predetermined first threshold b is determined. An update program is notified to the user on a human-machine interaction device, when the first value t is less than the predetermined first threshold b. The user is notified of a fault occurring, when the first value t is greater than or equal to the predetermined first threshold b.

As the specific steps and features of the methods described in detail in the above embodiment of system, no further described herein.

Those skilled in the art should understand that all or part of steps of various methods in the above embodiments can be performed by associated devices, controlled by a program. The program can be stored in a computer readable storage medium. The computer readable storage medium includes a read-only memory, a random access memory, a magnetic disk or a compact disk and so on. In detail, steps of the above embodiments can be programmed into an independent program, in an actual process of performing the present disclosure, and the independent program can be stored in a server, the magnetic disk and a flash disk, the independent program is downloaded and saved in a storage of a local device, or updated a version to a local system by being downloaded. Above functions are performed by a computer program of a storage executed by a processor.

The above specific example are described in the present disclosure, are only used for helping to understand the present disclosure, it should not be a restriction of the present disclosure. The present disclosure to those skilled in the art can be deduced, transformed or substituted, according to the present disclosure.

**Claims**

1. A method for diagnosing an initial position of a resolver, comprising:

   a detection step (6), comprising: detecting a real value of the initial position of the resolver mounted on a motor;
   a position abnormity determination step (7), comprising: acquiring an initial position deviation according to the real value and an original value of the initial position of the resolver; and determining, according to a predetermined initial position threshold range, where the initial position deviation is located;
   **characterized in that** the method further comprises:

   a torque abnormity determination step (8) being executed when the initial position deviation falls in the predetermined initial position threshold range, comprising: acquiring a torque deviation according to a torque of the motor and a preset given torque; and comparing the torque deviation with a predetermined torque deviation threshold; and
   a fault treatment step (9), comprising: determining whether the initial position of the resolver is normal, according to the times that the initial position deviation exceeds the predetermined initial position threshold range and the times that the torque deviation is greater than the predetermined torque deviation threshold.

2. The method as claimed in claim 1, wherein the step of detecting the real value of the initial position of the resolver comprises:

   detecting a status and a rotation speed of the motor; and
   detecting the real value of the initial position of the resolver, when the motor is in an idle status and the rotation speed is greater than or equal to a predetermined rotation speed.

3. The method as claimed in claim 1, after the step of determining, according to a predetermined initial position threshold range, where the initial position deviation is located, the method further comprising:

   subtracting L from a first value when the initial position deviation is less than the minimum value of the predetermined initial position threshold range; and
   adding L to the first value when the initial position deviation is greater than the maximum value of the predetermined initial position threshold range;
   wherein L is an integer greater than or equal to 1.

4. The method as claimed in claim 3, after the step of comparing the torque deviation with a predetermined torque deviation threshold, the method further comprising:

   adding L to a second value when the torque deviation is greater than the predetermined torque deviation threshold;
   subtracting L from the second value when the torque deviation is less than or equal to the predetermined torque deviation threshold.

5. The method as claimed in claim 4, wherein the fault treatment step comprises:

   comparing the first value with a predetermined first threshold, and comparing the second value with a predetermined second threshold;
   determining the initial position of the resolver is normal, when the first value is less than the predetermined first threshold while the second value is less than the predetermined second threshold;
   determining the initial position of the resolver is abnormal when the first value is greater than or equal to the predetermined first threshold.

6. The method as claimed in claim 5, wherein the step of determining the initial position of the resolver is abnormal when the first value is greater than or equal to the predetermined first threshold comprises:

   notifying a user of a fault occurring, when the first value is greater than or equal to the predetermined first threshold while the second value is less than the predetermined second threshold;
   notifying the user of a serious fault occurring, when the first value is greater than or equal to the predetermined first threshold, while the second value is greater than or equal to the predetermined second threshold.

7. The method as claimed in claim 1, wherein the step of acquiring the initial position deviation according to the real value and the original value of the initial position of the resolver comprises:

calculating (S71) an average value of N real values of the initial position of the resolver,
calculating (S71) an absolute value of a difference of the average value and the original value of the initial position; and
taking (S71) the absolute value as the initial position deviation of the resolver;
wherein N is an integer greater than or equal to 1.

8. The method as claimed in claim 1, wherein the step of acquiring the torque deviation according to the torque of the motor and the preset given torque comprises:

detecting the motor M times to obtain M torques represented by $T_V$;
acquiring (S81) M torque accuracies corresponding to the M torques, according to the following formula:

$$\frac{\left|T_V - T_M\right|}{T_V} \times 100\%,$$

where $T_M$ represents the given torque; and
calculating (S81) an average value of the M torque accuracies, and taking the average value of the M torque accuracies as the torque deviation;
wherein M is an integer greater than or equal to 1.

9. A device for diagnosing an initial position of a resolver, comprising:

a detection module (10), configured to detect a real value of the initial position of the resolver mounted on a motor;
an abnormity determination module (20), configured to: acquire an initial position deviation according to the real value and an original value of the initial position of the resolver; determine, according to a predetermined initial position threshold range, where the initial position deviation is located;
**characterized in that**
the abnormity determination module (20) is further configured to: acquire a torque deviation according to a torque of the motor and a preset given torque when the initial position deviation falls in the predetermined initial position threshold range; and compare the torque deviation with a predetermined torque deviation threshold; and
the device further comprises a fault treatment module (30), configured to determine whether the initial position of the resolver is normal, according to the times that the initial position deviation exceeds the predetermined initial position threshold range and the times that the torque deviation is greater than the predetermined torque deviation threshold.

10. The device as claimed in claim 9, wherein the detection module (10) comprises:

a trigger unit (110), configured to detect a status and a rotation speed of the motor, and to determine the status and the rotation speed of the motor;
a resolver self-learning unit (120), configured to detect the real value of the initial position of the resolver, when the motor is in an idle status and the rotation speed is greater than or equal to a predetermined rotation speed.

11. The device as claimed in claim 9, wherein the abnormity determination module (20) comprises:
an abnormity position determination unit, configured to acquire N real values of the initial position of the resolver from the detection module, to calculate an average value of the N real values, and calculate an absolute value of a difference of the average value and the original value of the initial position, and to take the absolute value as the initial position deviation.

12. The device as claimed in claim 11, wherein the abnormity position determination unit further is configured to compare the initial position deviation with a minimum allowable value and a maximum allowable value of a predetermined initial position deviation.

13. The device as claimed in claim 9, wherein the abnormity determination module (20) further comprises:

an abnormity torque determination unit, configured to detect the motor M times to obtain M torques represented by $T_V$, and to acquire M torque accuracies corresponding to the M torques, according to the following formula:

$$\frac{\left|T_V - T_M\right|}{T_V} \times 100\%,$$

wherein $T_M$ represents the given torque;
and to calculate an average value of the M torque accuracies, and to take the average value of the M torque accuracies as the torque deviation; wherein M is an integer greater than or equal to 1.

14. An electric vehicle, comprising:

a human-machine interaction device (1);
a motor (3), configured to drive a plurality of wheels of the electric vehicle; and
the device as claimed in any one of claims 9-13.

15. A computer readable storage medium, having a computer program stored therein, the computer program being configured to be executed by a processor to perform the method as claimed in any one of claims 1-8 on the electric vehicle as claimed in claim 14.

**Patentansprüche**

1. Verfahren zum Diagnostizieren einer Anfangsposition eines Resolvers, das Folgendes beinhaltet:

einen Erkennungsschritt (6), der Folgendes beinhaltet: Erkennen eines realen Werts der Anfangsposition des an einem Motor montierten Resolvers;
einen Positionsabnormitätsbestimmungsschritt (7), der Folgendes beinhaltet: Erfassen einer Anfangspositionsabweichung gemäß dem realen Wert und einem ursprünglichen Wert der Anfangsposition des Resolvers; und Bestimmen, gemäß einem vorbestimmten Anfangspositionsschwellenbereich, wo sich die Anfangspositionsabweichung befindet;
**dadurch gekennzeichnet, dass** das Verfahren ferner Folgendes beinhaltet:

einen Drehmomentabnormitätsbestimmungsschritt (8), der ausgeführt wird, wenn die Anfangspositionsabweichung in den vorbestimmten Anfangspositionsschwellenwertbereich fällt, der Folgendes beinhaltet: Erfassen einer Drehmomentabweichung gemäß einem Drehmoment des Motors und einem voreingestellten gegebenen Drehmoment; und Vergleichen der Drehmomentabweichung mit einem vorbestimmten Drehmomentabweichungsschwellenwert; und
einen Fehlerbehandlungsschritt (9), der Folgendes beinhaltet: Feststellen, ob die Anfangsposition des Resolvers normal ist, gemäß den Zeiten, in denen die Anfangspositionsabweichung den vorbestimmten Anfangspositionsschwellenwertbereich überschreitet, und den Zeiten, in denen die Drehmomentabweichung größer ist als der vorbestimmte Drehmomentabweichungsschwellenwert.

2. Verfahren nach Anspruch 1, wobei der Schritt des Erkennens des realen Wertes der Anfangsposition des Resolvers Folgendes beinhaltet:

Erkennen eines Zustands und einer Drehzahl des Motors; und
Erkennen des realen Werts der Anfangsposition des Resolvers, wenn sich der Motor in einem Leerlaufzustand befindet und die Drehzahl gleich einer oder größer als eine vorbestimmte(n) Drehzahl ist.

3. Verfahren nach Anspruch 1, wobei nach dem Schritt des Bestimmens, gemäß einem vorbestimmten Anfangspositionsschwellenwertbereich, wo sich die Anfangspositionsabweichung befindet, das Verfahren ferner Folgendes beinhaltet:

Subtrahieren von L von einem ersten Wert, wenn die Anfangspositionsabweichung kleiner ist als der Minimalwert des vorbestimmten Anfangspositionsschwellenbereichs; und
Addieren von L zu dem ersten Wert, wenn die Anfangspositionsabweichung größer ist als der Maximalwert des vorbestimmten Anfangspositionsschwellenbereichs;
wobei L eine ganze Zahl gleich oder größer 1 ist.

4. Verfahren nach Anspruch 3, wobei das Verfahren nach dem Schritt des Vergleichens der Drehmomentabweichung mit einem vorbestimmten Drehmomentabweichungsschwellenwert ferner Folgendes beinhaltet:

Addieren von L zu einem zweiten Wert, wenn die Drehmomentabweichung größer ist als der vorbestimmte Drehmomentabweichungsschwellenwert;
Subtrahieren von L von dem zweiten Wert, wenn die Drehmomentabweichung gleich dem oder kleiner als der vorbestimmte(n) Drehmomentabweichungsschwellenwert ist.

5. Verfahren nach Anspruch 4, wobei der Fehlerbehandlungsschritt Folgendes beinhaltet:

Vergleichen des ersten Wertes mit einem vorbestimmten ersten Schwellenwert, und Vergleichen des zweiten Wertes mit einem vorbestimmten zweiten Schwellenwert;
Feststellen, dass die Ausgangsposition des Resolvers normal ist, wenn der erste Wert kleiner als der vorbestimmte erste Schwellenwert ist, während der zweite Wert kleiner als der vorbestimmte zweite Schwellenwert ist;
Feststellen, dass die Anfangsposition des Resolvers anormal ist, wenn der erste Wert gleich dem oder größer als vorbestimmte(n) erste(n) Schwellenwert ist.

6. Verfahren nach Anspruch 5, wobei der Schritt des Feststellens, dass die Anfangsposition des Resolvers abnormal ist, wenn der erste Wert gleich dem oder größer als der vorbestimmte(n) erste(n) Schwellenwert ist, Folgendes beinhaltet:

Benachrichtigen eines Benutzers über das Auftreten eines Fehlers, wenn der erste Wert gleich dem oder größer als der vorbestimmte(n) erste(n) Schwellenwert ist, während der zweite Wert kleiner als der vorbestimmte zweite Schwellenwert ist;
Benachrichtigen des Benutzers über das Auftreten eines schwerwiegenden Fehlers, wenn der erste Wert gleich dem oder größer als der vorbestimmte(n) erste(n) Schwellenwert ist, während der zweite Wert gleich dem oder größer als der vorbestimmte(n) zweite(n) Schwellenwert ist.

7. Verfahren nach Anspruch 1, wobei der Schritt des Erfassens der Anfangspositionsabweichung gemäß dem realen Wert und dem ursprünglichen Wert der Anfangsposition des Resolvers Folgendes beinhaltet:

Berechnen (S71) eines Durchschnittswerts von N realen Werten der Anfangsposition des Resolvers,
Berechnen (S71) eines Absolutwerts einer Differenz des Durchschnittswerts und des ursprünglichen Werts der Anfangsposition; und
Nehmen (S71) des Absolutwerts als die Anfangspositionsabweichung des Resolvers;
wobei N eine ganze Zahl gleich oder größer 1 ist.

8. Verfahren nach Anspruch 1, wobei der Schritt des Erfassens der Drehmomentabweichung gemäß dem Drehmoment des Motors und dem voreingestellten gegebenen Drehmoment Folgendes beinhaltet:

M-maliges Erkennen des Motors, um M durch $T_V$ dargestellte Drehmomente zu erhalten;
Erfassen (S81) von M Drehmomentgenauigkeiten entsprechend den M Drehmomenten, gemäß der folgenden Formel:

$$\frac{\left|T_V - T_M\right|}{T_V} \times 100\%$$

,

wobei $T_M$ das gegebene Drehmoment darstellt;

und
Berechnen (S81) eines Durchschnittswerts der M Drehmomentgenauigkeiten und Nehmen des Durchschnittswerts der M Drehmomentgenauigkeiten als die Drehmomentabweichung;
wobei M eine ganze Zahl gleich oder größer 1 ist.

9. Gerät zum Diagnostizieren einer Anfangsposition eines Resolvers, das Folgendes umfasst:

ein Erkennungsmodul (10), konfiguriert zum Erkennen eines realen Werts der Anfangsposition des an einem Motor montierten Resolvers;
ein Abnormitätsbestimmungsmodul (20), konfiguriert zum: Erfassen einer Anfangspositionsabweichung gemäß dem realen Wert und einem ursprünglichen Wert der Anfangsposition des Resolvers; Bestimmen, gemäß einem vorbestimmten Anfangspositionsschwellenbereich, wo sich die Anfangspositionsabweichung befindet;
**dadurch gekennzeichnet, dass**
das Abnormitätsbestimmungsmodul (20) ferner konfiguriert ist zum: Erfassen einer Drehmomentabweichung gemäß einem Drehmoment des Motors und einem voreingestellten gegebenen Drehmoment, wenn die anfängliche Positionsabweichung in den vorbestimmten Anfangspositionsschwellenbereich fällt; und Vergleichen der Drehmomentabweichung mit einem vorbestimmten Drehmomentabweichungsschwellenwert; und
das Gerät umfasst ferner ein Fehlerbehandlungsmodul (30), konfiguriert zum Feststellen, ob die Anfangsposition des Resolvers normal ist, gemäß Zeiten, in denen die Anfangspositionsabweichung den vorbestimmten Anfangspositionsschwellenwertbereich überschreitet, und den Zeiten, in denen die Drehmomentabweichung größer als der vorbestimmte Drehmomentabweichungsschwellenwert ist.

10. Gerät nach Anspruch 9, wobei das Erkennungsmodul (10) Folgendes umfasst:

eine Triggereinheit (110), konfiguriert zum Erkennen eines Zustands und einer Drehzahl des Motors und zum Bestimmen des Zustands und der Drehzahl des Motors;
eine Resolver-Selbstlerneinheit (120), konfiguriert zum Erkennen des realen Werts der Anfangsposition des Resolvers, wenn sich der Motor in einem Leerlaufzustand befindet und die Drehzahl gleich einer oder größer als eine vorbestimmte(n) Drehzahl ist.

11. Gerät nach Anspruch 9, wobei das Abnormitätsbestimmungsmodul (20) Folgendes umfasst:

eine Abnormitätspositionsbestimmungseinheit, konfiguriert zum Erfassen N realer Werte der Anfangsposition des Resolvers von dem Erkennungsmodul, zum Berechnen eines Durchschnittswerts der N realen Werte und zum Berechnen eines Absolutwerts einer Differenz zwischen dem Durchschnittswert und dem ursprünglichen Wert der Anfangsposition und zum Nehmen des Absolutwerts als die Anfangspositionsabweichung.

12. Gerät nach Anspruch 1, wobei die Abnormitätspositionsbestimmungseinheit ferner zum Vergleichen der Anfangspositionsabweichung mit einem minimal zulässigen Wert und einem maximal zulässigen Wert einer vorbestimmten Anfangspositionsabweichung konfiguriert ist.

13. Gerät nach Anspruch 9, wobei das Abnormitätsbestimmungsmodul (20) ferner Folgendes umfasst:

   eine Abnormitätsdrehmomentbestimmungseinheit, die zum M-maligen Erkennen des Motors konfiguriert ist, um M durch $T_V$ dargestellte Drehmomente zu erhalten, und zum Erfassen von M Drehmomentgenauigkeiten entsprechend den M Drehmomenten gemäß der folgenden Formel:

$$\frac{|T_V - T_M|}{T_V} \times 100\%$$

   ,

   wobei $T_M$ das gegebene Drehmoment darstellt; und zum Berechnen eines Durchschnittswerts der M Drehmomentgenauigkeiten und zum Nehmen des Durchschnittswerts der M Drehmomentgenauigkeiten als die Drehmomentabweichung; wobei M eine ganze Zahl gleich oder größer 1 ist.

14. Elektrofahrzeug, das Folgendes umfasst:

   eine Mensch-Maschine-Interaktionsvorrichtung (1);
   einen Motor (3), der zum Antreiben mehrerer Räder des Elektrofahrzeugs konfiguriert ist; und
   das Gerät nach einem der Ansprüche 9-13.

15. Computerlesbares Speichermedium mit einem darin gespeicherten Computerprogramm, wobei das Computerprogramm zur Ausführung durch einen Prozessor konfiguriert ist, um das in einem der Ansprüche 1-8 beanspruchte Verfahren an dem Elektrofahrzeug nach Anspruch 14 durchzuführen.

**Revendications**

1. Procédé de diagnostic d'une position initiale d'un résolveur, comprenant :

   une étape de détection (6), comprenant : une détection d'une valeur réelle de la position initiale du résolveur monté sur un moteur ;
   une étape de détermination d'anomalie de position (7), comprenant : une acquisition d'un écart de position initiale selon la valeur réelle et une valeur d'origine de la position initiale du résolveur ; et une détermination, selon une plage seuil de position initiale prédéterminée, d'où l'écart de position initiale est situé ;
   **caractérisé en ce que** le procédé comprend en outre :

   une étape de détermination d'anomalie de couple (8) étant exécutée lorsque l'écart de position initiale se trouve dans la plage seuil de position initiale prédéterminée, comprenant : une acquisition d'un écart de couple selon un couple du moteur et un couple donné prédéfini ; et une comparaison de l'écart de couple avec un seuil d'écart de couple prédéterminé ; et
   une étape de traitement de défaut (9), comprenant : une détermination du fait que la position initiale du résolveur est normale ou non, selon les fois où l'écart de position initiale dépasse la plage seuil de position initiale prédéterminée et les fois où l'écart de couple est supérieur au seuil d'écart de couple prédéterminé.

2. Procédé selon la revendication 1, dans lequel l'étape de détection de la valeur réelle de la position initiale du résolveur comprend :

   une détection d'un état et d'une vitesse de rotation du moteur ; et
   une détection de la valeur réelle de la position initiale du résolveur, lorsque le moteur est dans un état inactif et la vitesse de rotation est supérieure ou égale à une vitesse de rotation prédéterminée.

3. Procédé selon la revendication 1, après l'étape de détermination, selon une plage seuil de position initiale prédéterminée, d'où l'écart de position initiale est situé, le procédé comprenant en outre :

   une soustraction de L d'une première valeur lorsque l'écart de position initiale est inférieur à la valeur minimum de la plage seuil de position initiale prédéterminée ; et
   un ajout de L à la première valeur lorsque l'écart de position initiale est supérieur à la valeur maximum de la plage seuil de position initiale prédéterminée ;

dans lequel L est un entier supérieur ou égal à 1.

4. Procédé selon la revendication 3, après l'étape de comparaison de l'écart de couple avec un seuil d'écart de couple prédéterminé, le procédé comprenant en outre :

un ajout de L à une seconde valeur lorsque l'écart de couple est supérieur au seuil d'écart de couple prédéterminé ;
une soustraction de L de la seconde valeur lorsque l'écart de couple est inférieur ou égal au seuil d'écart de couple prédéterminé.

5. Procédé selon la revendication 4, dans lequel l'étape de traitement de défaut comprend :

une comparaison de la première valeur à un premier seuil prédéterminé, et une comparaison de la seconde valeur à un second seuil prédéterminé ;
une détermination du fait que la position initiale du résolveur est normale, lorsque la première valeur est inférieure au premier seuil prédéterminé tandis que la seconde valeur est inférieure au second seuil prédéterminé ;
une détermination du fait que la position initiale du résolveur est anormale lorsque la première valeur est supérieure ou égale au premier seuil prédéterminé.

6. Procédé selon la revendication 5, dans lequel l'étape de détermination du fait que la position initiale du résolveur est anormale lorsque la première valeur est supérieure ou égale au premier seuil prédéterminé comprend :

une notification d'un utilisateur de la survenue d'un défaut, lorsque la première valeur est supérieure ou égale au premier seuil prédéterminé tandis que la seconde valeur est inférieure au second seuil prédéterminé ;
une notification de l'utilisateur de la survenue d'un défaut grave, lorsque la première valeur est supérieure ou égale au premier seuil prédéterminé, tandis que la seconde valeur est supérieure ou égale au second seuil prédéterminé.

7. Procédé selon la revendication 1, dans lequel l'étape d'acquisition de l'écart de position initiale selon la valeur réelle et la valeur d'origine de la position initiale du résolveur comprend :

un calcul (S71) d'une valeur moyenne de N valeurs réelles de la position initiale du résolveur,

un calcul (S71) d'une valeur absolue d'une différence entre la valeur moyenne et la valeur d'origine de la position initiale ; et
une considération (S71) de la valeur absolue à titre d'écart de position initiale du résolveur ;
dans lequel N est un entier supérieur ou égal à 1.

8. Procédé selon la revendication 1, dans lequel l'étape d'acquisition de l'écart de couple selon le couple du moteur et le couple donné prédéfini comprend :

une détection du moteur M fois pour obtenir M couples représentés par $T_V$ ;
une acquisition (S81) de M précisions de couple correspondant aux M couples, selon la formule suivante :

$$\frac{|T_V - T_M|}{T_V} \times 100\%$$

où $T_M$ représente le couple donné ; et
un calcul (S81) d'une valeur moyenne des M précisions de couple, et une considération de la valeur moyenne des M précisions de couple à titre d'écart de couple ;
dans lequel M est un entier supérieur ou égal à 1.

9. Dispositif de diagnostic d'une position initiale d'un résolveur, comprenant :

un module de détection (10), configuré pour détecter une valeur réelle de la position initiale du résolveur monté sur un moteur ;
un module de détermination d'anomalie (20), configuré pour : une acquisition d'un écart de position initiale selon la valeur réelle et une valeur d'origine de la position initiale du résolveur ;
une détermination, selon une plage seuil de position initiale prédéterminée, d'où l'écart de position initiale est situé ;
**caractérisé en ce que**
le module de détermination d'anomalie (20) est en outre configuré pour : une acquisition d'un écart de couple selon un couple du moteur et un couple donné prédéfini lorsque l'écart de position initiale se trouve dans la plage seuil de position initiale prédéterminée ; et une comparaison de l'écart de couple avec un seuil d'écart de couple prédéterminé ; et
le dispositif comprend en outre un module de traitement de défaut (30), configuré pour déterminer le fait que la position initiale du résolveur est normale ou non, selon les fois où l'écart de position initiale dépasse la plage seuil de position initiale prédéterminée et les fois où l'écart de couple est supérieur au seuil d'écart de couple prédéterminé.

**10.** Dispositif selon la revendication 9, dans lequel le module de détection (10) comprend :

une unité de déclenchement (110), configurée pour détecter un état et une vitesse de rotation du moteur, et pour déterminer l'état et la vitesse de rotation du moteur ;

une unité d'auto-apprentissage de résolveur (120), configurée pour une détection de la valeur réelle de la position initiale du résolveur, lorsque le moteur est dans un état inactif et la vitesse de rotation est supérieure ou égale à une vitesse de rotation prédéterminée.

**11.** Dispositif selon la revendication 9, dans lequel le module de détermination d'anomalie (20) comprend :

une unité de détermination de position d'anomalie, configurée pour acquérir N valeurs réelles de la position initiale du résolveur à partir du module de détection, pour calculer une valeur moyenne des N valeurs réelles, et calculer une valeur absolue d'une différence entre la valeur moyenne et la valeur d'origine de la position initiale, et pour considérer la valeur absolue à titre d'écart de position initiale.

**12.** Dispositif selon la revendication 11, dans lequel l'unité de détermination de position d'anomalie est en outre configurée pour comparer l'écart de position initiale avec une valeur permise minimum et une valeur permise maximum d'un écart de position initiale prédéterminé.

**13.** Dispositif selon la revendication 9, dans lequel le module de détermination d'anomalie (20) comprend en outre :

une unité de détermination de couple d'anomalie, configurée pour détecter le moteur M fois pour obtenir M couples représentés par $T_V$, et pour acquérir M précisions de couple correspondant aux M couples, selon la formule suivante :

$$\frac{|T_V - T_M|}{T_V} \times 100\%$$

dans laquelle $T_M$ représente le couple donné ; et pour calculer une valeur moyenne des M précisions de couple, et pour considérer la valeur moyenne des M précisions de couple à titre d'écart de couple ; dans lequel M est un entier supérieur ou égal à 1.

**14.** Véhicule électrique, comprenant :

un dispositif d'interaction homme-machine (1) ;
un moteur (3), configuré pour entraîner une pluralité de roues du véhicule électrique ; et
le dispositif selon l'une quelconque des revendications 9 à 13.

**15.** Support de stockage lisible par ordinateur, présentant un programme informatique stocké dessus, le programme informatique étant configuré pour être exécuté par un processeur pour réaliser le procédé selon l'une quelconque des revendications 1 à 8 sur le véhicule électrique selon la revendication 14.

detection module

trigger unit

resolver self-learning
unit

abnormity
determination module

fault treatment module

FIG. 1

human-machine
interaction device

motor controller

motor

FIG. 2

detection step

position abnormity
determination step

torque abnormity
determination step

fault treatment step

FIG. 3

calculating an average value of N real values of an initial position of a resolver, calculating an absolute value of a difference of the average value and an original value of the initial position, and taking the absolute value as the initial position deviation of the resolver — S71

S72 — $\left|\overline{\theta_n} - \theta_0\right| < \partial$

N

S73 — $\partial < \left|\overline{\theta_n} - \theta_0\right| < \partial_{max}$ — N

S74 — adding L to a first value t+L

Y

acquiring M torque accuracies corresponding to the M torques, and calculating an average value of the M torque accuracies — S81

S82 — $\overline{T_A} \leq x\%$ — N

S83 — adding L to a second value k+L

Y

S84 — an abnormity determination program is ended

Y

FIG. 4

S91 — k<a — N — S93 — t<b — Y — notifying of updating

Y

S92 — t<b — N — notifying of a serious fault occurring

N — notifying of a fault occurring

Y

normal

ending

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103532451 A

- US 6392418 B1